# EUROPEAN PATENT APPLICATION

(11) **EP 3 927 111 A1**
(43) Date of publication of application: **22.12.2021**
(21) Application number: 21179088.6
(22) Date of filing: 11.06.2021
(51) Int. Cl.: H05B 3/46, B29C 45/27

(54) **HOT RUNNER SLEEVE HEATER**

(30) Priority: 17.06.2020 US 202063040192 P
(71) Applicant: Mold-Masters (2007) Limited, Georgetown, ON L7G 4X5 (CA)
(72) Inventor: LU, HAIQIAN, Mississauga (CA)
(74) Representative: Grünecker Patent- und Rechtsanwälte PartG mbB

(57) **Abstract**

A sleeve heater for supplying heat to a melt delivery component of a hot runner system. The sleeve heater includes a tube-shaped body having an outer surface and an inner surface. The inner surface of the tube-shaped body defines an opening in which a melt delivery component is received. A heater wraps at least partially around the tube-shaped body and extends along a length of the tube-shaped body. A thermocouple groove is formed in the outer surface of the tube-shaped body. The thermocouple groove includes a lateral bend; and a bore that extends from the lateral bend into a thickness of the tube-shaped body. Together the bore and the latera bend maintain the position of a sensing end of a thermocouple installed therein relative to the tube-shaped body.

## Description

### FIELD

This application relates generally to a sleeve heater for supplying heat to a melt delivery component of a hot runner system and more particularly, to a sleeve heater having thermocouple retaining features.

### BACKGROUND

The operational temperature of a hot runner system is maintained by a temperature controller connected to heaters and thermocouples of various heated melt delivery components. Proper positioning of a sensing end of a thermocouple is important for effectively controlling a heater or heaters of a heated melt delivery component that is associated with the thermocouple. If a thermocouple is improperly positioned, the temperature controller may take an incorrect temperature reading of the component being monitored with the thermocouple. If this happens, the controller may improperly heat the heated component relative to its desired temperature set-point. In some cases, this results in improper heating of the molding material as it flows through the affected melt deliver component and may result in defective molded articles formed from the improperly heated molding material.

### SUMMARY

An aspect of this application provides a sleeve heater for supplying heat to a melt delivery component of a hot runner system, the sleeve heater comprising: a tube-shaped body having an outer surface and an inner surface, the inner surface defining an opening in which a melt delivery component is receivable; a heater wrapped at least partially around the tube-shaped body and extending along a length of the tube-shaped body; a groove formed in the outer surface of the tube-shaped body, the groove including a lateral bend; and a bore extending from the lateral bend into a thickness of the tube-shaped body.

The tube-shaped body can include a thickness bounded by the outer surface and the inner surface, the bore extending within the thickness of the tube-shaped body.

The sleeve heater can comprise a thermocouple partially received in the groove and an end of the thermocouple for sensing temperature can be partially received in the bore.

The bore can include a bottom and the end of the thermocouple can be separated from the bottom.

The end of the thermocouple can be separated from the bottom by substantially a width of the thermocouple.

The end of the thermocouple can be in contact with the bottom.

Another aspect of this application provides a hot runner system comprising: a melt delivery component; a sleeve heater including: a tube-shaped body having an outer surface and an inner surface, the inner surface defining an opening in which the melt delivery component is received; a heater wrapped at least partially around the tube-shaped body and extending along a length of the tube-shaped body; a groove formed in the outer surface of the tube-shaped body, the groove including a lateral bend; and a bore extending from the lateral bend into a thickness of the tube-shaped body.

The melt delivery component can include a nozzle.

The tube-shaped body can be made of a material more thermally conductive than the material of the nozzle.

The melt delivery component can includes a manifold inlet extension.

### BRIEF DESCRIPTION OF DRAWINGS

The foregoing and other features and advantages of the invention will be apparent from the following description of embodiments thereof as illustrated in the accompanying drawings. The accompanying drawings, which are incorporated herein and form a part of the specification, further serve to explain the principles of the invention and to enable a person skilled in the pertinent art to make and use the invention.
FIG. 1 is a partially sectioned view of a hot runner system having a nozzle with a sleeve heater in accordance with an embodiment of the present application.
FIG. 2 is a partially sectioned elevation view of the sleeve heater of FIG. 1.
FIG. 3 is a partially sectioned elevation view of a tube-shaped body of the sleeve heater of FIG. 2 without the heater and the thermocouple.
FIG. 4 is an enlarged view of a portion 4 of FIG. 3.
FIG. 5 is a sectional view of FIG. 3 taken along line 5 - 5.
FIG. 6 is an enlarged view of a portion 6 of FIG. 5 and shown with a thermocouple.

### DETAILED DESCRIPTION

Specific embodiments of the present invention are now described with reference to the figures, wherein like reference numbers indicate identical or functionally similar elements. The following detailed description is merely exemplary in nature and is not intended to limit the invention or the application and uses of the invention. In the following description, "downstream" is used with reference to the direction of mold material flow from an injection unit of an injection molding machine to a mold cavity of a mold of an injection molding system, and also with reference to the order of components or features thereof through which the mold material flows from the injection unit to the mold cavity, whereas "upstream" is used with reference to the opposite direction. Furthermore, there is no intention to be bound by any expressed or implied theory presented in the preceding field, background, summary or the following detailed description.

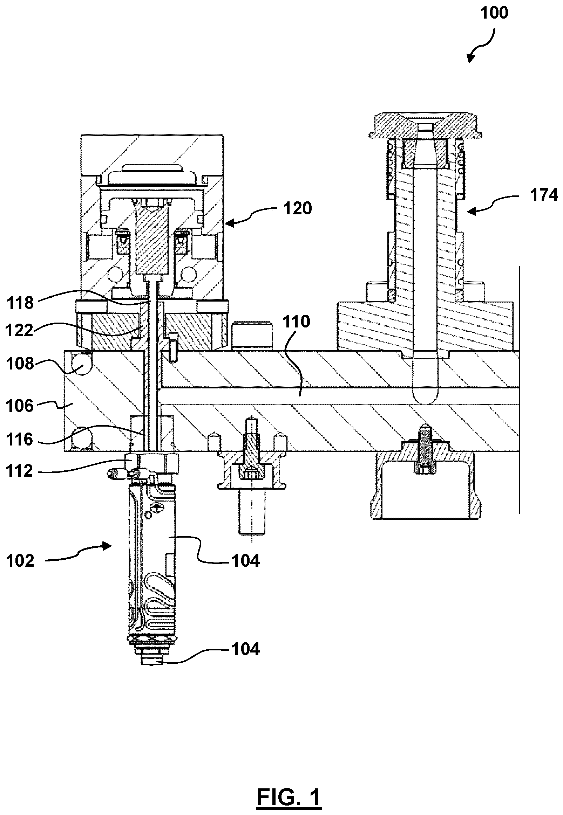

FIG. 1 is a partially sectioned view of a hot runner system 100 having a nozzle 102 with a sleeve heater 104 in accordance with an embodiment of the present application. Hot runner system 100 includes a manifold 106 and nozzle 102. Manifold 106 includes a manifold heater 108 for maintaining manifold 106 at a suitable processing temperature and further includes a manifold channel 110 that extends therethrough and is in fluid communication with nozzle 102. Nozzle 102 delivers molding material from manifold 106 to a mold cavity (not shown).

Nozzle 102 includes sleeve heater 104, a nozzle body 112, an upstream portion of which is shown in sectional view, and a nozzle tip 114. Nozzle body 112 extends through sleeve heater 104 and includes a nozzle channel 116 that receives molding material from manifold channel 110. Sleeve heater 104 provides heat to nozzle body 112 to maintain nozzle 102 at a suitable processing temperature. As shown in FIG. 1 by way of example, hot runner system 100 further includes other components such as a valve pin 118 coupled to a valve pin actuator 120 for controlling the flow of molding material from nozzle 102 and a valve guide 122 received in manifold 106 and through which valve pin 118 slidably extends.

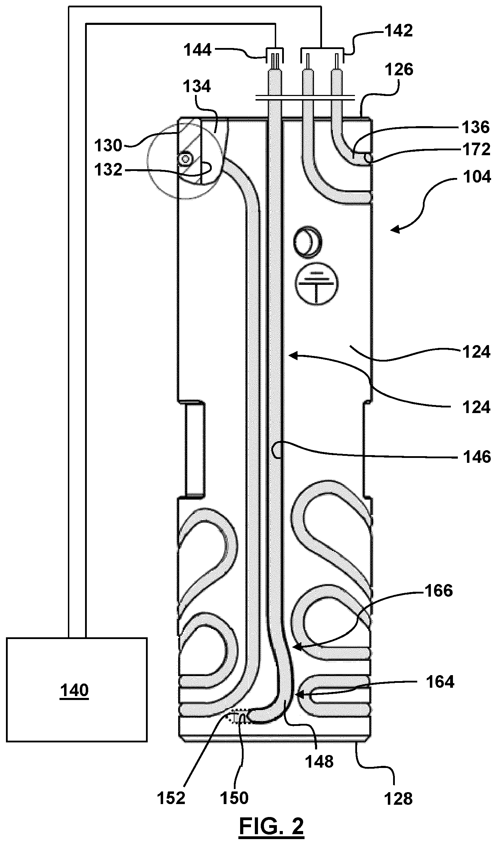

Referring now to FIG. 2 which is a partially sectioned front view of sleeve heater 104, sleeve heater 104 includes a tube-shaped body 124 having a proximal end 126 and a distal end 128. Tube-shaped body 124 further includes an outer circumferential surface 130 and an inner circumferential surface 132 that extend between proximal and distal ends 126, 128. Tube-shaped body 124 defines an axially extending opening 134, bounded by inner surface 132, and in which nozzle body 112 is received.

Sleeve heater 104 includes an electrical resistance heater 136 which supplies heat to tube-shaped body 124. Resistance heater 136 wraps at least partially around outer surface 130 and extends along a length of tube-shaped body 124. Opening 134 and the portion of nozzle body 112 surrounded by tube-shaped body 124 are closely sized so as to promote heat transfer from tube-shaped body 124 to nozzle body 112. Sleeve heater 104 further includes a thermocouple 138. Thermocouple 138 and resistance heater 136 connect to a temperature controller 140 which is programmed to monitor and maintain the temperature of sleeve heater 104. In the illustrated embodiment shown herein, terminal ends 142 of resistance heater 136 and terminal ends 144 of thermocouple 138 project beyond proximal end 126 of tube-shaped body 124.

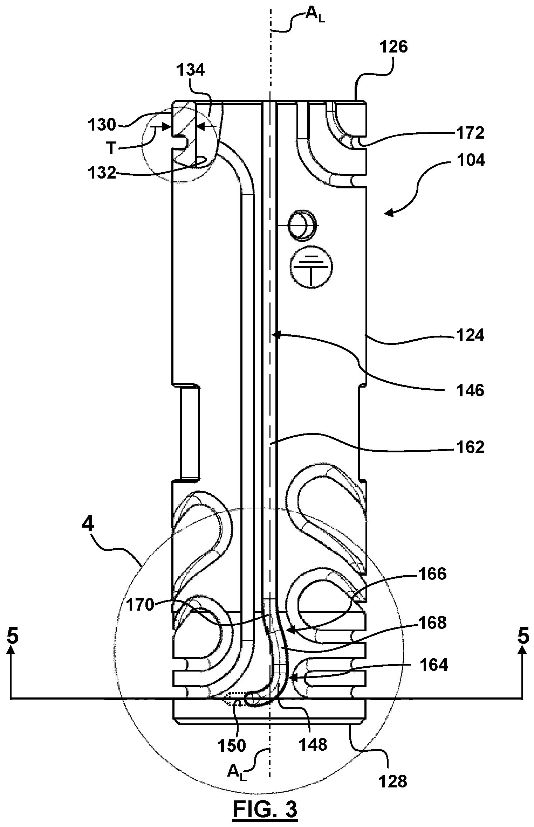

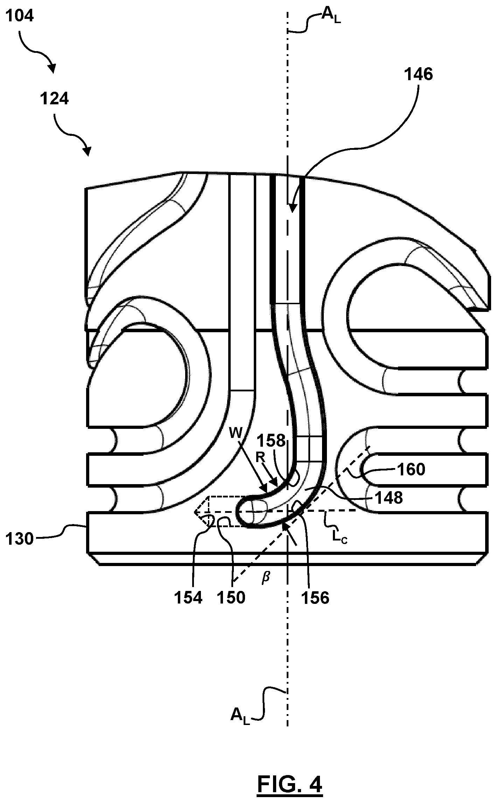

Continuing with FIG. 2 and referring to FIGS. 3 and 4, in which FIG. 3 is a partially sectioned elevation view of tube-shaped body 124, in accordance with embodiments hereof and FIG. 4 is an enlarged view of a portion 4 of FIG. 3. Sleeve heater 104 includes a thermocouple groove 146 formed in outer surface 130 of tube-shaped body 124. Thermocouple groove 146 is sized to receive thermocouple 138 therein. Thermocouple groove 146 includes a lateral bend 148 formed in outer surface 130. A bore 150 (shown in phantom in FIGS. 2, 3, and 4) extends from lateral bend 148 crosswise into tube-shaped body 124 relative to a longitudinal axis A_{L} of sleeve heater 104.

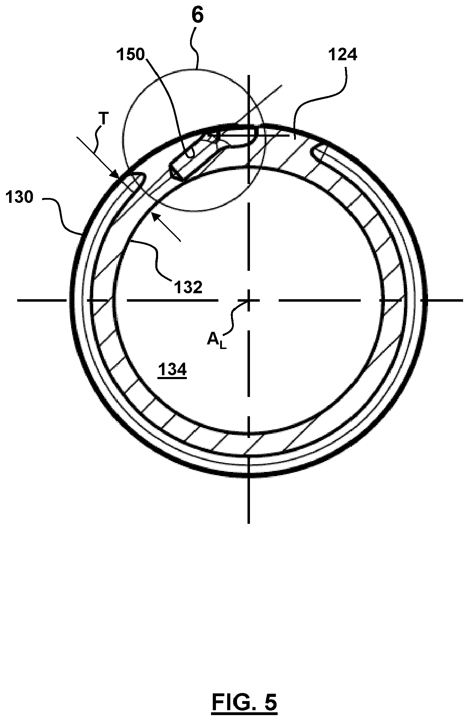

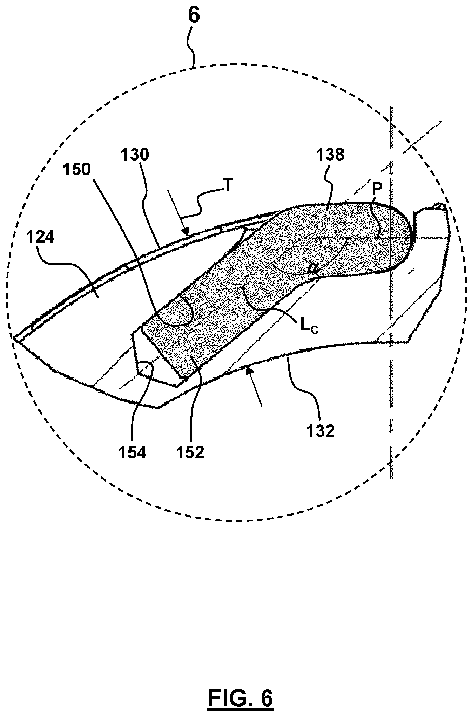

Referring to FIGS. 5 and 6, in which FIG. 5 is a sectional view of FIG. 3 taken along line 5-5 and FIG. 6 is an enlarged view of a portion 6 of FIG. 5 shown with thermocouple 138 installed in bore 150. Bore 150 extends within a thickness T of tube-shaped body 124 and is between outer and inner surfaces 130, 132 thereof. In the illustrated embodiment shown herein, bore 150 is offset towards inner surface 132 of tube-shaped body 124. Referring to FIG. 6, bore 150 extends at an angle *α* into tube-shaped body 124 from axial plane P. As shown, angle *α* is about 145 degrees; however other angles are possible depending on the thickness T of tube-shaped body 124 and the placement of bore 150 relative to outer and inner surfaces 130, 132.

Continuing with FIG. 6 and referring to FIG. 2 a sensing end 152 of thermocouple 138 extends into bore 150 and is circumferentially surrounded by bore 150. Sensing end 152 and bore 150 are closely sized so as to promote contact between sensing end 152 and tube-shaped body 124 which promotes accurate readings of tube-shaped body by controller 140. With bore 150 offset towards inner surface 132, sensing end 152 of thermocouple 138 is close to nozzle body 112 and is surrounded by tube-shaped body 124. A bottom surface 154 of bore 150 can be conical shaped as shown or can be shaped to correspond to the shape of a tip of thermocouple 138. In the illustrated embodiment shown herein thermocouple 138 abuts bottom surface 154 such that the temperature of tube-shaped body 124 is measured at bottom surface 154. Alternatively, thermocouple 138 is spaced apart from bottom surface 154 by, for example, the width of thermocouple 138, and the temperature of tube-shaped body 124 is measured at the circumference of bore 150 adjacent or near to bottom surface 154. This arrangement also promotes accurate readings of tube-shaped body by controller 140. Rearward from bore 150, thermocouple 138 is shaped to accommodate angle *α* at which bore 150 extends into a thickness T of tube-shaped body 124 and, as shown in FIG. 2, is further shaped to conform to the directional change realized by lateral bend 148.

With this arrangement, bore 150 limits or prevents radial displacement of sensing end 152 of thermocouple 138 relative to a centerline L_{C} of bore150 and, as shown in FIG. 4, an outer wall 156 of lateral bend 148 opposes bore 150 which limits or prevents rearward displacement of thermocouple 138 from bore 150 and an inner wall 158 of lateral bend 148 and/or bottom surface 154 of bore 150 limits or prevents forward displacement of thermocouple 138 within bore 150. Together, lateral bend 148 and bore 150 extending therefrom hold the position of sensing end 152 of thermocouple 138 relative to tube-shaped body, which promotes accurate and reliable temperature readings of tube-shaped body 124.

Continuing with FIGS. 4, in the illustrated embodiment shown herein, lateral bend 148 is a 90-degree bend; however, other bend angles are contemplated. For example, a lateral bend between about 70-degrees to about 110-degrees is effective in holding thermocouple 138 within bore 150. A radius R of lateral bend 148 is selected so that outer wall 156 opposes centerline L_{C} of bore 150. In the illustrated embodiment shown herein, radius R of lateral bend 148 is 1.5 times width W of thermocouple groove 146 as measured at lateral bend 148; however other configurations are contemplated. In this configuration a line 160 that is tangent to outer wall 156 and intersects centerline L_{C} of bore 150 is at an angle *β* to longitudinal axis AL of about 45 degrees.

Referring to FIG. 3, rearward from lateral bend 148, thermocouple groove 146 includes a longitudinally extending portion 162. In the illustrated embodiment shown herein, longitudinally aligned with longitudinal axis A_{L} and a proximal end 164 of lateral bend 148 is offset to one side of longitudinal axis A_{L} and is connected to longitudinally extending portion 162 by a diagonal portion 166 which helps to maintain the axial positioning of thermocouple 138 (see FIG. 2) rearward from lateral bend 148. As shown by way of example, diagonal portion 166 is formed by a first arc-shaped portion 168 that is tangent to a second arc-shaped portion 170. Alternatively, longitudinally extending portion 162 extends from proximal end 126 of lateral bend 148 and is either aligned with or offset from longitudinal axis A_{L}.

Continuing with FIGS. 2 and 3, in the illustrated embodiments shown herein, resistance heater 136 is a coil element heater received in a heater groove 172 which is formed in outer surface 130 of tube-shaped body 124 and is separate from thermocouple groove 146. In the illustrated embodiment shown herein, heater groove 172 is formed as a tortuous path that extends only partially around the circumference of tube-shaped body 124; however, other shapes for heater groove 172 are contemplated.

Tube-shaped body 124 is made from a material that is more thermally conductive than the material from which nozzle body 112 is made. Examples of suitable materials for tube-shaped body include copper, brass, and alloys thereof. Examples of suitable materials for nozzle body 112 include H13 tool steel and 420 stainless steel.

In the illustrated embodiment shown herein, sleeve heater 104 is a separate component in which nozzle body 112 is received; however, it should be appreciated that features formed in outer surface 130 of tube-shaped body 124 can also be formed in an outer surface of a melt delivery component, for example, an outer surface of a hot runner nozzle.

In the illustrated embodiment shown and described herein, sleeve heater 104 provides heat to nozzle body 112. It should be appreciated; however, that sleeve heater 104 is suitable for use with other hot runner melt delivery components which require heat input to maintain molding material at a sufficiently molten state. Examples of such melt delivery components include a manifold inlet extension 174 and heated sprue bar.

The illustrated embodiment described above is presented as an example and not by way of limitation. It will be apparent to persons skilled in the relevant art that various changes in form and detail can be made therein without departing from the application. Thus, the breadth and scope of the present application should not be limited by any of the above-described embodiments but should be defined only in accordance with the appended claims and their equivalents.

## Claims

1. A sleeve heater for supplying heat to a melt delivery component of a hot runner system, the sleeve heater comprising:
a tube-shaped body having an outer surface and an inner surface, the inner surface defining an opening in which a melt delivery component is receivable;
a heater wrapped at least partially around the tube-shaped body and extending along a length of the tube-shaped body;
a groove formed in the outer surface of the tube-shaped body, the groove including a lateral bend; and
a bore extending from the lateral bend into a thickness of the tube-shaped body.

2. The sleeve heater of claim 1 wherein the tube-shaped body includes a thickness bounded by the outer surface and the inner surface, the bore extending within the thickness of the tube-shaped body.

3. The sleeve heater of claim 2 further comprising a thermocouple partially received in the groove and an end of the thermocouple for sensing temperature is partially received in the bore.

4. The sleeve heater of claim 3 wherein the bore includes a bottom and the end of the thermocouple is separated from the bottom.

5. The sleeve heater of claim 4 wherein the end of the thermocouple is separated from the bottom by substantially a width of the thermocouple.

6. The sleeve heater of claim 3 wherein the end of the thermocouple is in contact with the bottom.

7. A hot runner system comprising:
a melt delivery component;
a sleeve heater including:
a tube-shaped body having an outer surface and an inner surface, the inner surface defining an opening in which the melt delivery component is received;
a heater wrapped at least partially around the tube-shaped body and extending along a length of the tube-shaped body;
a groove formed in the outer surface of the tube-shaped body, the groove including a lateral bend; and
a bore extending from the lateral bend into a thickness of the tube-shaped body.

8. The hot runner system of claim 7, wherein the tube-shaped body includes a thickness bounded by the outer surface and the inner surface, the bore extending within the thickness of the tube-shaped body.

9. The hot runner system of claim 8 further comprising a thermocouple at least partially received in the groove and an end of the thermocouple for sensing temperature is partially received in the bore.

10. The hot runner system of claim 9 wherein the bore includes a bottom and the end of the thermocouple is separated from the bottom.

11. The hot runner system of claim 10 wherein the end of the thermocouple is separated from the bottom by substantially a width of the thermocouple.

12. The hot runner system of claim 11 wherein the end of the thermocouple is in contact with the bottom.

13. The hot runner system of claim 12 wherein the melt delivery component includes a nozzle.

14. The hot runner system of claim 13 wherein the tube-shaped body is made of a material more thermally conductive than an another material of the nozzle.

15. The hot runner system of claim 12 wherein the melt delivery component includes a manifold inlet extension.
